(19) Europäisches Patentamt / European Patent Office / Office européen des brevets

(11) **EP 2 598 912 B1**

(12) **FASCICULE DE BREVET EUROPEEN**

(45) Date de publication et mention
de la délivrance du brevet:
**14.05.2014 Bulletin 2014/20**

(21) Numéro de dépôt: **11735854.9**

(22) Date de dépôt: **15.07.2011**

(51) Int Cl.:
**G01S 19/20** $^{(2010.01)}$

(86) Numéro de dépôt international:
**PCT/EP2011/062174**

(87) Numéro de publication internationale:
**WO 2012/013525 (02.02.2012 Gazette 2012/05)**

(54) **PROCEDE DE DETERMINATION D'UN VOLUME DE PROTECTION DANS LE CAS DE DEUX PANNES SATELLITAIRES SIMULTANEES**

VERFAHREN ZUR BESTIMMUNG EINES SCHUTZRAUMS IM FALLE VON ZWEI GLEICHZEITIGEN SATELLITENAUSFÄLLEN

METHOD FOR DETERMINING A PROTECTION SPACE IN THE EVENT OF TWO SIMULTANEOUS SATELLITE FAILURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2010 FR 1056281**

(43) Date de publication de la demande:
**05.06.2013 Bulletin 2013/23**

(73) Titulaires:
• **Sagem Défense Sécurité**
**92100 Boulogne-Billancourt (FR)**
• **UNIVERSITE DE BORDEAUX**
**33000 Bordeaux (FR)**
• **Institut Polytechnique de Bordeaux**
**33400 Talence (FR)**

(72) Inventeurs:
• **NAJIM, Mohamed**
**F-33400 Talence (FR)**
• **GIREMUS, Audrey**
**F-33400 Talence (FR)**
• **FAURIE, Frédéric**
**F-33000 Bordeaux (FR)**

(74) Mandataire: **Regimbeau**
**20, rue de Chazelles**
**75847 Paris Cedex 17 (FR)**

(56) Documents cités:
**EP-A1- 1 914 561     US-A1- 2010 033 370**

• **ESCHER A-C ET AL: "GNSS/IRS Hybridization: Fault Detection and Isolation of MOre than one Range Failure", PROCEEDINGS OF THE INSTITUTE OF NAVIGATION (ION) GPS, XX, XX, 24 septembre 2002 (2002-09-24), pages 2619-2629, XP002433664,**
• **BROWN, R. GROVER: "SOLUTION OF THE TWO-FAILURE GPS RAIM PROBLEM UNDER WORST-CASE BIAS CONDITIONS: PARITY SPACE APPROACH", NAVIGATION - JOURNAL OF THE INSTITUTE OF NAVIGATION, vol. 44, no. 4, 28 février 1998 (1998-02-28), pages 425-431, XP002637571, USA**

## Description

DOMAINE TECHNIQUE GENERAL

La présente invention se rapporte au domaine des systèmes de contrôle d'intégrité pour l'aviation civile et militaire.

Plus précisément, elle concerne un procédé permettant de déterminer un volume de protection dans le cas de deux pannes satellitaires simultanées dans un système de navigation.

ETAT DE L'ART

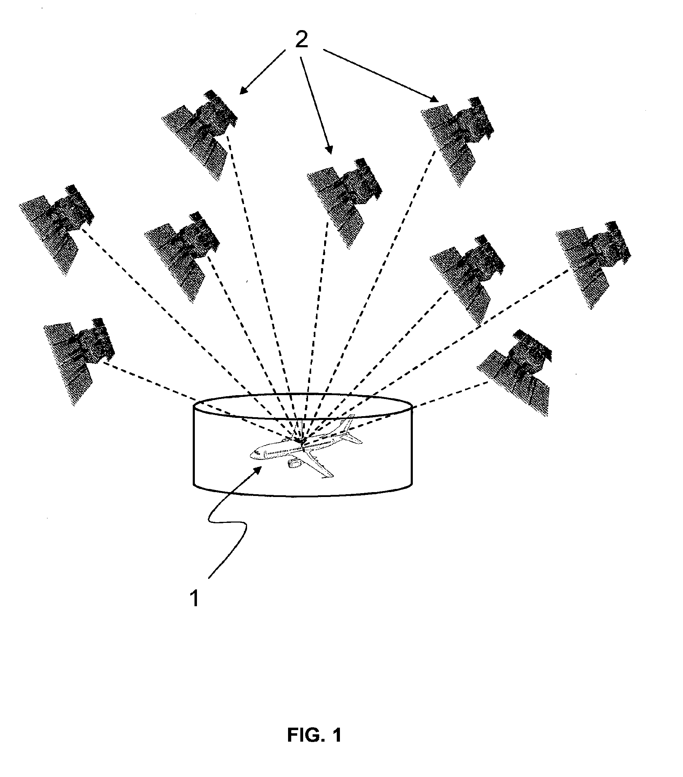

Les véhicules possédant des systèmes de navigation par satellites sont classiquement équipés d'un récepteur qui poursuit N satellites, comme représenté sur la figure 1. Toutes les secondes, le récepteur doit déterminer sa position à partir des N mesures provenant des satellites en vue.

Pour chacun de ces satellites, le récepteur calcule une estimation de la distance le séparant de celui-ci, appelée pseudo-distance du fait des différentes erreurs dont elle est entachée. Chaque mesure est en effet perturbée par un bruit de mesure dû notamment à la traversée de l'onde dans l'atmosphère. Néanmoins, les caractéristiques statistiques de ces bruits de mesure sont connues et ces perturbations ne sont pas considérées comme des pannes.

En revanche, certains satellites peuvent présenter des défauts plus importants et fournir des informations erronées au récepteur, dégradant ainsi dangereusement la précision de la solution de navigation. Ces pannes satellites, essentiellement dues à des dysfonctionnements de l'horloge satellite ou à des problèmes d'éphémérides, se traduisent par des biais sur la ou les mesures satellite en panne qui doivent être détectés. Ces biais s'ajoutent aux mesures et sont modélisés soit par des échelons soit par des rampes évoluant avec le temps.

Même si ces pannes satellites sont rarissimes (probabilité de l'ordre de $10^{-4}$/h par satellite), les systèmes de navigation doivent prendre en compte ce risque, en particulier dans l'aviation, où un écart de position peut être fatal.

Les systèmes de contrôle d'intégrité ont pour objet la détection et l'exclusion des pannes satellites. On distingue deux configurations différentes pour les systèmes de contrôle d'intégrité. Lorsque le système est couplé à un système d'aide à la navigation (comme une centrale inertielle), on parle de contexte AAIM (pour Aircraft Autonomous Integrity Monitoring en anglais). Lorsque le système de contrôle d'intégrité fonctionne de manière autonome, on parle de contexte RAIM (pour Receiver Autonomous Integrity Monitoring en anglais). A une probabilité de détection manquée donnée, dépendant de la phase de vol et fixée par l'Organisation de l'Aviation Civile Internationale (OACI), les systèmes de contrôle d'intégrité doivent être capables de fournir une borne sur l'erreur de position de l'appareil qui ne peut être dépassée sans détecter un dysfonctionnement dans les délais impartis. C'est ainsi ce que l'on appelle un volume de protection.

Il s'agit d'un cylindre centré sur la position estimée de l'appareil et défini par un rayon de protection horizontal et un rayon de protection vertical (la hauteur du cylindre). Il définit le volume dans lequel on peut affirmer que l'appareil se trouve réellement, à la probabilité de détection manquée près.

Jusqu'à récemment, l'unique hypothèse d'une seule panne satellite suffisait à satisfaire aux exigences de l'OACI. Mais avec le déploiement prochain de nouvelles constellations de satellites (Galiléo en 2014 et le GPS modernisé en 2013), ainsi que le durcissement des exigences de l'OACI (probabilité de détection manquée inférieure à une sur dix millions), les systèmes de contrôle d'intégrité doivent aujourd'hui prendre en compte l'augmentation du nombre de mesures satellites disponibles. En particulier, ils doivent pouvoir traiter plusieurs pannes satellites simultanées, événement dont la probabilité d'occurrence n'est plus négligeable au regard des exigences de l'OACI.

Divers procédés ont été proposés jusqu'à présent pour fournir une solution au problème du calcul des rayons de protection.

Que ce soit dans un contexte RAIM ou un contexte AAIM, les systèmes de contrôle d'intégrité utilisent un ou plusieurs tests d'hypothèses pour détecter un ou plusieurs défauts éventuels parmi les mesures disponibles. Ces tests d'hypothèses reposent sur des variables de test comparées à des seuils pour détecter la présence de panne. Ces variables de test sont construites à partir d'une ou plusieurs estimations de la solution de navigation et éventuellement des mesures reçues. L'estimation de la solution de navigation peut être réalisée par exemple par un filtre de Kalman ou par un estimateur au sens des moindres carrés.

La détermination du volume de protection traduisant les performances du système de contrôle d'intégrité est fondée sur les statistiques des différentes variables de test utilisées. Les rayons de protection associés aux algorithmes les plus utilisés de détection d'une panne satellitaire sont ainsi rappelés dans le document « Fde using multiple integrated gps/inertial kalman filters in the presence of temporally and spatially correlated ionospheric errors », Proceedings of ION GPS (2001), par K. Vanderwerf.

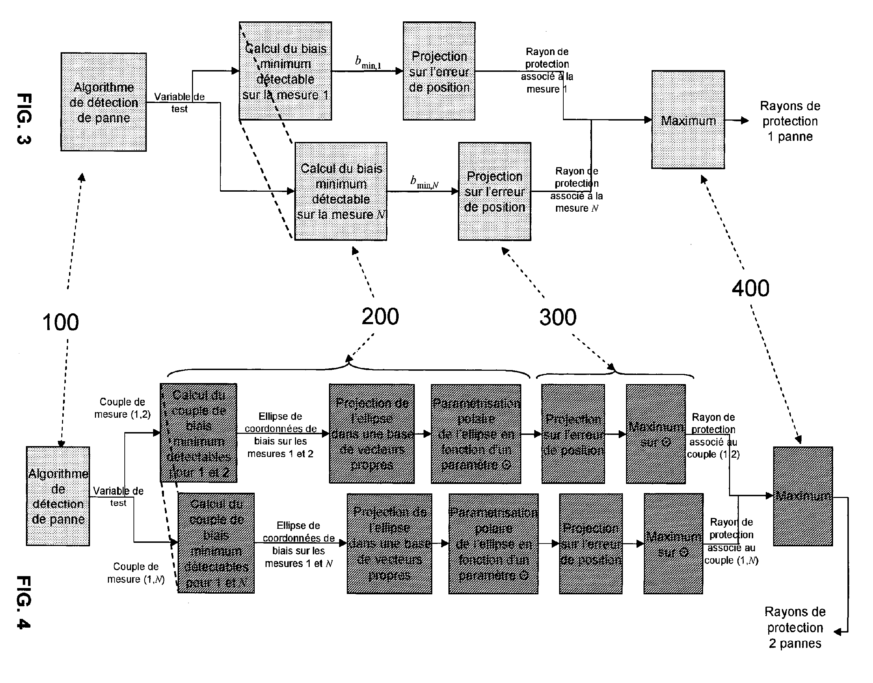

Le schéma d'un exemple de procédé de détermination d'un volume de protection dans le cas d'une unique panne satellitaire est représenté par la figure 3. Par définition, les rayons de protection doivent être indépendants des mesures et donc être prédictibles pour un lieu et un instant donnés. Comme évoqué précédemment, le procédé de détection de panne effectué lors d'une étape 100 repose sur un ou plusieurs tests d'hypothèses. Par souci de clarté, on considère le cas d'un unique test d'hypothèses reposant sur une variable de test, notée $T_t$, dont la distribution statistique est connue et à laquelle un seuil de décision peut être déterminé pour une probabilité de fausse alarme donnée, notée $P_{fa}$. Pour une probabilité de détection manquée donnée $P_{md}$, l'étape 200 définit un biais minimum détectable pour chaque mesure $i \in [1, N]$ ; ce biais est noté par la suite $b_{min,i}$. Le biais minimum détectable $b_{min,i}$ représente l'amplitude minimum d'un biais apparaissant sur la mesure $i$ que le test d'hypothèses peut détecter pour une probabilité de détection manquée donnée. Il est à noter que $b_{min,i}$ ne dépend pas des mesures mais dépend de la géométrie du satellite $i$ ainsi que de la variance du bruit de mesure. L'impact de ce biais sur l'estimation de la solution de navigation est ensuite évalué lors de l'étape 300 de projection sur l'erreur de position. De cette façon est obtenue une borne maximale sur l'erreur d'estimation, notée *HPL(i)* pour l'erreur horizontale et *VPL(i)* pour l'erreur verticale, que le procédé ne peut dépasser sans détecter une panne sur la mesure $i$ avec la probabilité de détection manquée $P_{md}$ :

$$HPL(i) = \mu_H^{(i)} \widetilde{b}_{min,i}$$

$$VPL(i) = \mu_V^{(i)} \widetilde{b}_{min,i}$$

avec $\mu_H^{(i)}$ et $\mu_V^{(i)}$ les matrices de projection du biais de la mesure $i$ sur le plan horizontal et vertical de la solution de navigation respectivement.

Les rayons de protection sous l'hypothèse d'une seule panne à l'instant $t$ sont alors définis lors de l'étape 400 en choisissant la pire hypothèse, c'est-à-dire la valeur maximum selon les $N$ mesures pour *HPL* et pour *VPL*.

Il est à noter que, dans le cas d'une unique panne, le biais minimum détectable pour chaque mesure potentiellement fautive est un scalaire qui peut donc être aisément reprojeté sur l'erreur de position. Or, dans le cas d'une double panne, une infinité de couples de biais sont détectables pour une probabilité de détection manquée.

Il n'existe à l'heure actuelle pas de procédé de détermination d'un volume de protection dans le cas d'une double panne satellitaire simultanée.

## PRESENTATION DE L'INVENTION

La présente invention vise à résoudre ces difficultés en proposant une solution permettant la détermination d'un volume de protection dans le cas d'une double panne satellitaire simultanée dans une constellation d'une quinzaine de satellites, sans nécessiter une puissance de calcul sensiblement supérieure à celle des systèmes embarqués actuels, et donc sans coût supplémentaire.

Grâce à cette prise en compte d'un plus grand nombre d'incidents possible, l'invention permet une sécurité aérienne accrue, en considérant des cas qui jusque là auraient pu conduire à des catastrophes aériennes.

En outre, un but annexe de l'invention est de parvenir à cet objectif tout en proposant un procédé pouvant s'inscrire aussi bien dans un contexte AAIM que dans un contexte RAIM. Il y a donc une adaptabilité totale.

La présente invention se rapporte donc à un procédé de détermination d'un volume de protection dans le cas de deux mesures défaillantes de pseudo-distance entre un satellite et un récepteur recevant des signaux émis par différents satellites d'une constellation de radio-positionnement, caractérisé en ce qu'il comprend des étapes de :

(a) Détermination d'une variable de test représentative de la vraisemblance d'une défaillance en fonction des pseudo-distances mesurées par le récepteur ;
(b) Estimation, pour chaque couple de pseudo-distances parmi les pseudo-distances mesurées par le récepteur, de l'ensemble des couples de biais minimum détectables pour une probabilité de détection manquée donnée, à partir de l'expression de la variable de test obtenue ;
(c) Expression, pour chaque couple de pseudo-distances, de l'ensemble des couples de biais minimum détectables estimés sous la forme d'une équation définissant une ellipse associée au couple de pseudo-distances considéré ;
(d) Expression de l'équation de chaque ellipse en coordonnées paramétriques et expression de chaque couple de biais minimum détectables associés en fonction d'un unique paramètre ;
(e) Projection de chaque couple de biais minimum détectables ainsi paramétrisé sur au moins un sous-espace de $R^3$ ;
(f) Calcul, pour chaque sous-espace et chaque couple de biais, de l'erreur de position maximale induite par le couple de biais ;

(g) Sélection, pour chaque sous-espace, du maximum parmi toutes les erreurs de position maximales calculées et transmission vers l'extérieur des résultats de cette sélection.

Selon d'autres caractéristiques avantageuses et non limitatives de l'invention :

- le ou les sous-espaces choisis à l'étape (e) sont supplémentaires dans $R^3$, de façon à ce que les erreurs de position maximales définissent les dimensions d'un volume ;
- l'étape (e) comprend une projection sur le plan horizontal et une projection sur l'axe vertical ;
- la variable de test générée à l'étape (a) suit une loi du $\chi^2$ à $N$ degrés de liberté ;
- les coefficients de l'équation d'ellipse déterminée à l'étape (c) s'expriment en fonction de la probabilité de détection manquée et de la variance du bruit de mesure ;
- l'étape (d) comprend la projection de l'ellipse dans une base de vecteurs propres ;
- la paramétrisation de l'étape (d) est une paramétrisation polaire, l'unique paramètre étant une coordonnée angulaire ;
- une erreur d'estimation est obtenue à chaque projection à l'étape (e) d'un couple de biais sur un sous-espace de $R^3$, cette erreur d'estimation étant un vecteur de même dimension que le sous-espace s'exprimant seulement en fonction de l'unique paramètre obtenu à l'étape (d), noté $\theta$;
- l'erreur de position maximale induite est calculée à l'étape (f) en prenant la norme du vecteur erreur d'estimation et en la dérivant par rapport à $\theta$.

Selon un deuxième aspect, l'invention se rapporte à un système de contrôle d'intégrité, comprenant des moyens de traitement de données, associé à un récepteur recevant des signaux émis par différents satellites d'une constellation de radio-positionnement et fournissant au système des pseudo-distances mesurées entre des satellites de ladite constellation et le récepteur sur lesquelles les moyens mettent en oeuvre un procédé selon le premier aspect de l'invention, à l'issue duquel un signal est transmis à une interface du système.

Selon d'autres caractéristiques avantageuses et non limitatives de l'invention :

- le système est couplé à un dispositif de navigation inertielle selon un contexte AAIM.

L'invention concerne enfin un véhicule équipé d'un système selon le deuxième aspect de l'invention.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une constellation de satellites envoyant des données à un avion dans son volume de protection ;
- la figure 2 est un schéma d'un mode de réalisation d'un système de contrôle d'intégrité selon l'invention associé à un récepteur.
- la figure 3 est un schéma d'un procédé connu de détermination d'un volume de protection dans le cas d'une seule mesure défaillante de pseudo-distance entre un satellite et un récepteur ;
- la figure 4 est un schéma d'un mode de réalisation du procédé de détermination d'un volume de protection dans le cas de deux mesures défaillantes de pseudo-distance entre un satellite et un récepteur selon l'invention ;
- la figure 5 est un diagramme représentant les étapes d'un mode de réalisation du procédé de détermination d'un volume de protection dans le cas de deux mesures défaillantes de pseudo-distance entre un satellite et un récepteur selon l'invention ;
- la figure 6 est un graphique illustrant une ellipse utilisée lors d'une étape d'un mode de réalisation du procédé de détermination d'un volume de protection dans le cas de deux mesures défaillantes de pseudo-distance entre un satellite et un récepteur selon l'invention ;
- la figure 7 est un graphique illustrant l'erreur de position calculée lors d'une étape d'un mode de réalisation du procédé de détermination d'un volume de protection dans le cas de deux mesures défaillantes de pseudo-distance entre un satellite et un récepteur selon l'invention.

## DESCRIPTION DETAILLEE

Comme représenté sur les figures 1 puis 2, un véhicule 1 tel un avion, équipé d'un récepteur 10 de type GNSS, reçoit des signaux électromagnétiques (généralement des micro-ondes) provenant d'une pluralité de satellites 2 formant une constellation de radio-positionnement.

Chaque satellite 2 est équipé d'une horloge de haute précision, et le récepteur 10 connaît avec précision leur position grâce à des éphémérides stockées dans une mémoire 13. Grâce à l'horloge, on peut mesurer avec précision le temps mis par un signal pour effectuer le trajet entre le satellite 2 et le récepteur. Pour cela, le récepteur 10 estime par une technique de corrélation le temps de propagation du signal satellitaire, entre l'émission et sa réception. Connaissant la vitesse de la lumière, à laquelle se déplace l'onde du signal, un calculateur 11 que comprend le récepteur 10 multiplie la durée mesurée par cette vitesse, fournissant la pseudo-distance qui le sépare du satellite 2, comme expliqué précédemment. Le fait que la distance ne soit pas connue de façon sure à cause notamment du bruit de mesure entraîne une légère incertitude sur la position du véhicule 1. Le cylindre représenté sur la figure 1 correspond au volume centré sur la position estimée dans lequel la présence du véhicule est garantie à une probabilité de détection manquée près.

De façon générale, l'équation de mesure de navigation par satellite parmi une constellation de $N$ satellites s'écrit :

$$\widetilde{Y}_t = h_t\left(r_t, b_{\mathrm{H},t}\right) + \varepsilon_t + b_t$$

où, à l'instant t :

$\widetilde{Y}_t$ est le vecteur contenant les $N$ mesures formées par le récepteur, c'est-à-dire les $N$ pseudo-distances calculées selon le principe ci-dessus avec chacun des $N$ satellites.

$\varepsilon_t$ est le vecteur des $N$ bruits de mesure supposés gaussiens et centrés,

$b_t$ est le vecteur des $N$ biais impactant les $N$ mesures dont plusieurs composantes peuvent être non nulles,

la $i$ème composante de la fonction vectorielle $h_t(.)$ représente la distance géométrique séparant le récepteur du $i$ème satellite, perturbée par le biais d'horloge. Elle s'exprime de la façon suivante : $h_t^i\left(r_t, b_{\mathrm{H},t}\right) = \left\|r_t - r_t^i\right\| + b_{\mathrm{H},t}$ où $b_{\mathrm{H},t}$ est le biais d'horloge, et $r_t$ et $r_t^i$ désignent la position en coordonnées cartésiennes du récepteur et du $i$ème satellite, respectivement. On appelle $E_N$ l'ensemble tel que son $i$ème élément $E_N^i, i \in \left[1, N\right]$ est la $i$ème mesure satellitaire.

En linéarisant autour d'un point adéquatement choisi, l'équation de mesure devient $Y_t = H_t X_t + \varepsilon_t + b_t$ où, à l'instant $t$ :

$X_t$ est le vecteur d'état contenant la position du récepteur,

$H_t$ est la matrice d'observation linéarisée.

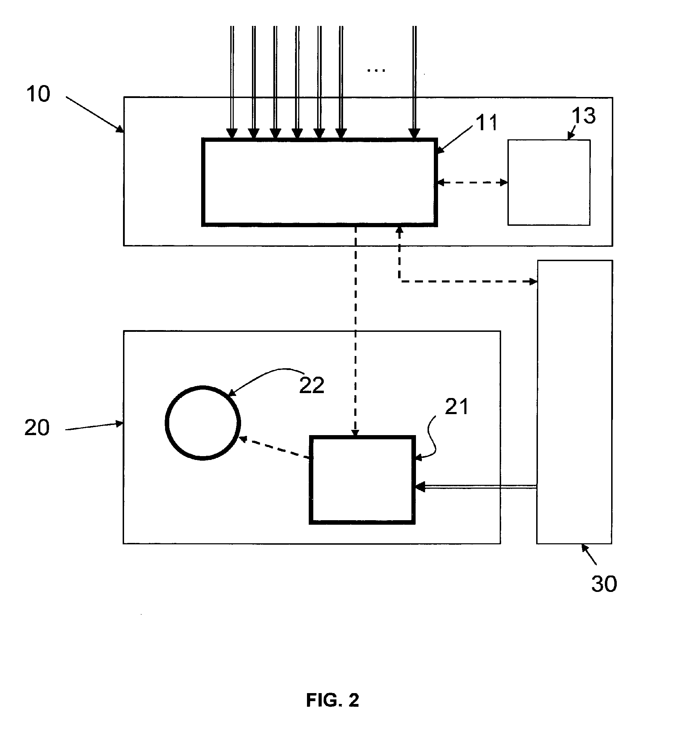

Le procédé de détermination d'un volume de protection selon l'invention est mis en oeuvre par un système 20 de contrôle d'intégrité, également représenté sur la figure 2, associé au récepteur 10. Ce système 20, comprenant des moyens 21 de traitement de données (un calculateur), reçoit et traite les $N$ mesures satellitaires fournies par le récepteur 10. Dans la suite de la description, on désignera par $i$ème mesure satellitaire la pseudo-distance mesurée entre le $i$ème satellite de la constellation de radio-positionnement observée et le récepteur 10, calculée par un calculateur 11 que comprend ce récepteur 10.

Après traitement, les caractéristiques du volume de protection déterminé sont transmises à une interface 22, afin d'être exploitée notamment par le pilote, ou par d'autres instruments de navigation.

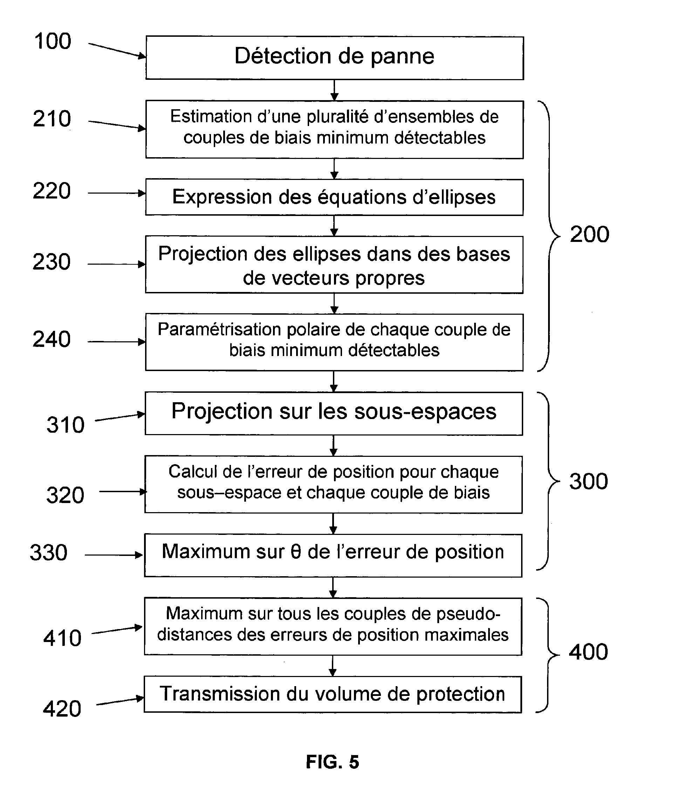

Les étapes d'un mode de réalisation du procédé de détermination d'un volume de protection selon l'invention sont représentées sur la figure 4, et plus particulièrement sur la figure 5.

*Détection de panne*

La détermination d'un volume de protection dans le cas de deux mesures potentiellement défaillantes commence de façon similaire aux procédés connus par une première étape 100 de détection de panne à partir des N mesures satellitaires.

Pour cela, le calculateur 21 du système 20 de contrôle d'intégrité détermine une variable de test $T_t$, qui comme expliquée précédemment est représentative de la vraisemblance d'une panne, par exemple si elle excède un seuil dépendant d'une probabilité de fausse alarme donnée, notée $P_{fa}$.

Par exemple, dans le cas d'un algorithme RAIM fondé sur la méthode des résidus, la variable de test utilisée pour décider de la présence d'une panne est avantageusement : $T_t = \dfrac{w_t^T w_t}{\sigma^2}$, où $w_t$ est le vecteur des résidus. Il est défini de la façon suivante : $w_t = Z_t - H_t \hat{X}_t^{LS} = \underbrace{(I_{N \times N} - H_t (H_t^T H_t)^{-1} H_t^T)}_{G_t} Z_t$.

La variable de test suit avantageusement une loi du $\chi_2$ à $N$ degrés de liberté, comme c'est le cas dans cet exemple.

*Couples de biais minimum détectables*

Une fois cette variable déterminée, le procédé va permettre lors d'une étape 200 d'exprimer une pluralité de couples de biais minimum détectables. Cette pluralité de couples de biais minimum détectables correspond aux hypothèses de pannes possibles. Ainsi, dans l'art antérieur, N défaillances possibles d'une seule mesure satellitaire étaient considérées. Le procédé selon l'invention envisage les $C_N^2 = \dfrac{N(N+1)}{2}$ possibilités de défaillances simultanées de deux mesures satellitaires.

Au cours d'une première sous-étape 210, le système 20 estime pour chaque couple de pseudo-distances mesurées l'ensemble des couples possibles de biais minimum détectables pour une probabilité de détection manquée donnée $P_{md}$.

La difficulté est qu'en passant en dimension deux, une infinité de couples de biais sont détectables pour une probabilité de détection manquée donnée, alors qu'il y a une solution unique dans le cas d'une seule panne satellitaire.

Pour estimer l'ensemble des couples de biais $b_{min,i}$ et $b_{min,j}$, le système 20 recalcule la variable de test $T_t$ en considérant que le vecteur de biais $b_t$ possède deux composantes non nulles correspondant aux mesures défaillantes.

Dans le cas de notre exemple des résidus, en l'absence de panne satellite, le vecteur de biais est entièrement nul et le vecteur des résidus peut être mis sous la forme $w_t = G_t \varepsilon_t$.

La variable de test vérifie alors normalement $T_t = \dfrac{\varepsilon_t^T G_t \varepsilon_t}{\sigma^2}$ (ce résultat s'obtient en notant que $G_t^T G_t = G_t^2 = G_t$) et elle suit une loi du $\chi_2$ à *N-4* degrés de liberté.

Si une des composantes au moins du vecteur biais $b_t$ est non nulle alors la variable de test suit une loi du $\chi_2$ décentrée de paramètre de non-centralité $\lambda$ et de degré de liberté *N-4*. En considérant que la *i*ème et la *j*ème mesure sont en panne, $b_t$ est de la forme $b_t = [0, \cdots, b_i, \cdots b_j, \cdots, 0]$. La variable de test peut alors être reliée à son paramètre de non-centralité :

$$\lambda = \frac{b^T G b}{\sigma^2} = \frac{G(i,i)}{\sigma^2} b_i^2 + \frac{G(j,j)}{\sigma^2} b_j^2 + 2\frac{G(i,j)}{\sigma^2} b_i b_j,$$

avec $G(l,m)$ l'élément situé sur la ligne *l* et la colonne *m* de la matrice *G*.

A une probabilité $P_{md}$ et un nombre de degrés de liberté donnés correspond une valeur de $\lambda$ et donc à un ensemble de valeurs $b_i$ et $b_j$ d'après l'équation précédente. Il s'agit des biais minimum détectables.

L'étape suivante 220 consiste à modifier cette équation pour en faire une équation d'ellipse de la forme

$$\alpha \left(b_{min,i}\right)^2 + \beta \left(b_{min,j}\right)^2 + \gamma b_{min,i} b_{min,j} = 1$$

avec $\alpha$, $\beta$ et $\gamma$ des coefficients dépendant avantageusement notamment de la probabilité de détection manquée $P_{md}$ et de la variance du bruit de mesure. Cela est réalisé par identification des coefficients du polynôme par le calculateur 21.

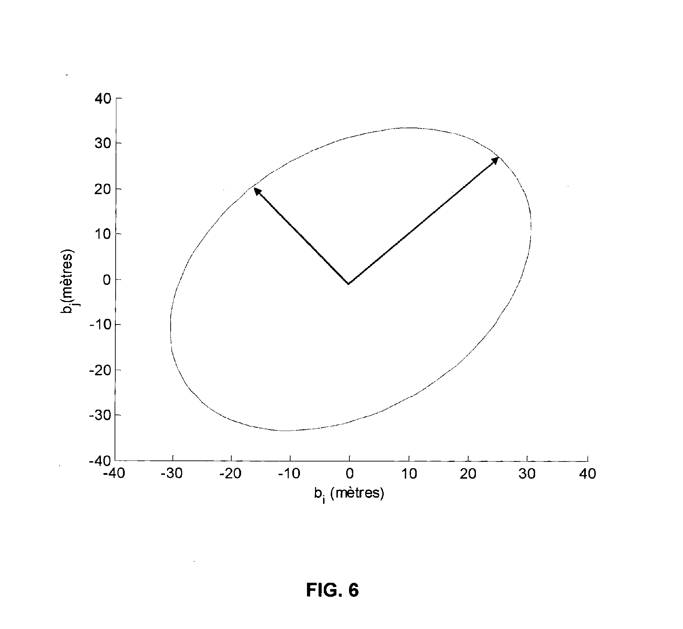

Cette ellipse, visible sur la figure 6, est telle que les couples de biais situés à l'extérieur de l'ellipse sont détectés avec une probabilité de détection manquée inférieure à $P_{md}$.

En particulier, les équations de la méthode des résidus donnent par exemple $\alpha = \dfrac{G(i,i)}{\lambda \sigma^2}$, $\beta = \dfrac{G(j,j)}{\lambda \sigma^2}$

et $\gamma = 2\dfrac{G(i,j)}{\lambda \sigma^2}$

Les rayons de protection sont par définition construits à partir du pire impact des biais définis par l'ellipse. A cause de l'infinité de couples de biais détectables, leur calcul nécessite de résoudre un problème d'optimisation sous contrainte difficile.

Pour cela le calculateur 21 va recalculer l'équation de chaque ellipse en coordonnées paramétriques, avantageusement en la projetant dans une base de vecteurs propres lors d'une étape 230.

En effet l'équation générale d'ellipse présentée plus haut peut être réécrite sous forme matricielle : $[b_{min,i}, b_{min,j}]$

$M[b_{min,i}, b_{min,j}]^T = 1$ avec $[.]^T$ désignant le transposé d'un vecteur ou d'une matrice et $M = \begin{bmatrix} \alpha & \gamma \\ \gamma & \beta \end{bmatrix}$

La matrice $M$ est symétrique et diagonalisable par le calculateur 21 dans une base de vecteurs propres de la façon suivante :

$M = PDP^T$ où $D$ est une matrice diagonale $D = \begin{bmatrix} D_{11} & 0 \\ 0 & D_{22} \end{bmatrix}$.

En utilisant cette décomposition, l'équation précédente peut être mise sous la forme :

$$\left[ b_{min,i}, b_{min,j} \right] PDP^T \left[ b_{min,i}, b_{min,j} \right]^T = 1$$

C'est-à-dire

$$\left[ \tilde{b}_{min,i}, \tilde{b}_{min,j} \right] D \left[ \tilde{b}_{min,i}, \tilde{b}_{min,j} \right]^T = 1 \text{ avec } \begin{bmatrix} \tilde{b}_{min,i} \\ \tilde{b}_{min,j} \end{bmatrix} = P^T \begin{bmatrix} b_{min,i} \\ b_{min,j} \end{bmatrix}.$$

Avec ce changement de repère, l'équation décrivant l'ellipse des biais minimum détectables pour une probabilité de détection manquée $P_{md}$ donnée devient : $\left( \dfrac{\tilde{b}_{min,i}}{a} \right)^2 + \left( \dfrac{\tilde{b}_{min,j}}{b} \right)^2 = 1$, avec $a$ et $b$ des paramètres dépendant de $D$ et $M$ et correspondant aux demi-axes de l'ellipse, comme représenté sur la figure 6.

La projection de l'ellipse dans une base de vecteurs propres a permis de supprimer le terme croisé entre $b_{min,i}$ et $b_{min,j}$ de l'équation.

La détermination par le calculateur 21 des paramètres $a$ et $b$ lors d'une étape 240 à partir des matrices calculées à l'étape précédente permet d'exprimer les biais en coordonnées paramétriques, d'où la transformation du problème bidimensionnel en un problème monodimensionnel :

$$\begin{cases} \widetilde{b}_{\min,i} = a\cos\theta, \\ \widetilde{b}_{\min,j} = b\sin\theta. \end{cases}$$

Ainsi, chaque couple de biais minimum détectables pour une probabilité de détection manquée est fonction d'un unique paramètre θ, ici une coordonnée polaire.

*Erreurs de position*

Pour obtenir les rayons de protection, il reste à projeter sur l'erreur de position les couples de biais situés sur le contour de l'ellipse et trouver l'erreur de position maximale, c'est-à-dire la plus défavorable. Cette approche est conservative car les couples à l'intérieur de l'ellipse conduisent à une erreur de position plus petite que ceux situés sur le contour. Il s'agit de l'étape 300.

Elle commence par une sous-étape 310 de projection de chaque couple de biais minimum détectables sur au moins un sous-espace de $R^3$. En effet l'ellipse est une courbe dans un espace en trois dimensions. Pour déterminer un volume de protection, il faut déterminer les dimensions de ce volume, et donc faire différentes projections. On appelle sous-espace de $R^3$ tout sous-espace vectoriel de dimension un ou deux, c'est-à-dire l'ensemble des plans et des droites. De façon avantageuse, on choisit ces sous-espaces de façon à ce qu'ils soient supplémentaires : par exemple un plan et une droite non coplanaire, trois droites non colinéaires deux à deux, deux plans non parallèles ni confondus, etc. Ainsi, l'espace engendré par ces sous-espaces est de dimension trois, et définit donc un volume.

De façon standardisée, les volumes de protection sont généralement des cylindres de base horizontale, définis par un rayon et une hauteur. Pour avoir un tel volume ; il suffit très avantageusement de prendre le plan horizontal comme premier sous-espace, et une droite verticale comme second sous-espace. L'erreur de position maximale sur le plan sera le rayon de la base, et l'erreur de position maximale sur la droite sera la hauteur du cylindre. L'homme du métier saura toutefois adapter l'invention à d'autres géométries de volumes de protection.

Cette sous-étape 310 est réalisée par le calculateur 21 au moyen d'un produit matriciel de la matrice des biais par une matrice de changement de repère.

Dans ce mode de réalisation préféré avec une géométrie cylindrique, les erreurs d'estimation horizontale (dans le plan) et verticale (sur la droite), notées respectivement $\Delta X_H^{(i,j)}$ et $\Delta X_V^{(i,j)}$, engendrées par les couples de biais possibles $(b_{\min,i}, b_{\min,j})$ s'expriment ainsi :

$$\Delta X_H^{(i,j)} = \mu_H^{(i,j)} \begin{bmatrix} b_{\min,i} \\ b_{\min,j} \end{bmatrix} \text{ et } \Delta X_V^{(i,j)} = \mu_V^{(i,j)} \begin{bmatrix} b_{\min,i} \\ b_{\min,j} \end{bmatrix}, \text{ avec } \mu_H^{(i,j)} \text{ et } \mu_V^{(i,j)}$$

les matrices de projection des biais sur les mesures *i* et *j* sur le plan horizontal et l'axe vertical de la solution de navigation respectivement.

En effet, pour un mode de réalisation incluant un estimateur de type moindre carrés, l'estimation du vecteur $X_t$ au sens des moindres carrés vérifie : $\hat{X}_t^{LS} = \widetilde{H}_t Z_t = \widetilde{H}_t(H_t X_t + \varepsilon_t + b_t) = X_t + \widetilde{H}_t(\varepsilon_t + b_t)$. Ainsi, si on considère seulement l'erreur d'estimation liée au biais, $\underbrace{\hat{X}_t^{LS} - X_t}_{\Delta X_t} = \widetilde{H}_t b_t$, avec

$$\widetilde{H}_t = H_t(H_t^T H_t)^{-1} H_t^T.$$

Dans ce mode de réalisation, $\mu_H^{(i,j)}$ et $\mu_V^{(i,j)}$ sont donc des sous-matrices de $\widetilde{H}_t$ formées des lignes correspondant aux coordonnées dans le plan horizontal et de ses colonnes *i* et *j* pour la première, et de la ligne correspondant à l'axe vertical et de ses colonnes *i* et *j* pour la deuxième. Les erreurs d'estimations sont donc des vecteurs de dimension un ou deux. Ici, pour le paramètre horizontal, le sous-espace sur lequel l'ellipse est projetée est un plan, donc de dimension deux, c'est pourquoi $\Delta X_H^{(i,j)}$ est un vecteur.

A partir des erreurs d'estimations, le système 20 calcule pour chaque sous-espace et chaque couple de biais les erreurs de position induites par le couple de biais au cours d'une étape 320.

Par la suite, seule l'erreur de position sur le plan horizontal est présentée. Néanmoins, la même approche est menée pour l'erreur de position en vertical. Avantageusement cette étape 320 est résolue par le calcul de la norme du vecteur erreur d'estimation.

Si l'on choisit par exemple la norme au sens du produit scalaire classique ( $\|\vec{u}\| = \sqrt{\vec{u} \cdot \vec{u}}$ ), en posant

$M_H = P^T \left(\mu_H^{(i,j)}\right)^T \mu_H^{(i,j)} P$ , l'erreur de position sur le plan horizontal induite par le couple $(b_{min,i}, b_{min,j})$ est calculée par le calculateur 21 grâce à l'équation :

$$\left\|\Delta X_H^{(i,j)}\right\| = \sqrt{M_H(1,1)a^2 \cos^2 \theta + M_H(2,2)b^2 \sin^2 \theta + 2M_H(1,2)ab\sin\theta\cos\theta} \, ,$$

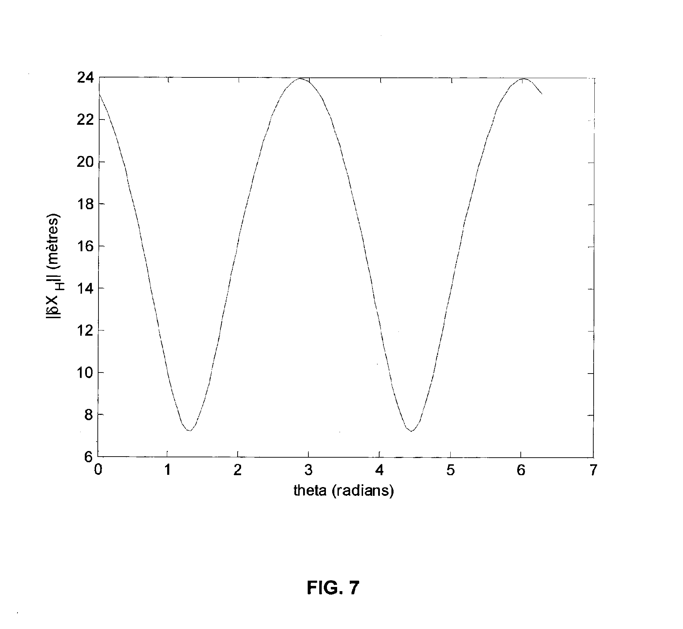

avec $M_H(l,m)$ l'élément de la ligne $l$ et de la colonne $m$ de la matrice $M_H$. Cette fonction de $\theta$ est représentée sur la figure 7.

Le rayon de protection horizontal s'obtient à l'étape 330 en cherchant le maximum par rapport au paramètre $\theta$ de l'erreur de position définie précédemment. Cette fonction possède plusieurs extrema locaux que l'on voit sur la figure 7, il y en a par exemple quatre ici. Pour les obtenir, le calculateur 21 va avantageusement dériver la fonction erreur de position en fonction de $\theta$, et choisir les valeurs où la dérivée s'annule. Après calcul, les solutions vérifient :

$$\theta = \frac{1}{2} \arctan\left(\frac{2abM_H(1,2)}{b^2 M_H(2,2) - a^2 M_H(1,1)}\right) + k\frac{\pi}{2} \, ,$$

avec k entier.

Le calculateur 21 recalcule la valeur de l'erreur de position pour chacun de ces extrema et sélectionne le maximum. Si on note $\theta_H^*$ l'ensemble des valeurs de $\theta$ qui correspond aux extrema de la fonction erreur de position horizontale (chaque $\theta$ correspondant à un couple de $b_{min,i}$ et $b_{min,j}$), on a alors $HPL^{(i,j)} = \max_{\theta \in \theta_H^*} \left\|\Delta X_H^{(ij)}\right\|$. Il s'agit alors de l'erreur de position maximale induite par les biais pour le couple considéré $(i,j) \in [1,N] \times [1,N]$ et $i \neq j$ de mesures satellitaires.

*Rayons de protection*

L'erreur maximale est calculée pour chacun des couples de mesures. Au cours d'une étape 410, le système 20 obtient les rayons de protection dans le cas de deux pannes à un instant en sélectionnant le maximum des erreurs calculées pour tous ces couples :

$$HPL_{(2)} = \max_{i,j}\left(HPL^{(i,j)}\right) \text{ avec } (i,j) \in [1,N] \times [1,N], \ i \neq j \, .$$

Le même raisonnement peut être appliqué pour l'axe vertical.

Le procédé fournit alors les valeurs des rayons de protection aux systèmes de bord lors de l'ultime étape 420.

*Systèmes et véhicules*

Comme décrit précédemment, le système 20 de contrôle d'intégrité, représenté sur la figure 2, est associé avec un récepteur 10, de type GNSS, configuré pour recevoir des mesures provenant de N satellites. Le récepteur 10 comprend des moyens 11 de traitement de données et une mémoire 13. Il transfère les mesures de façon classique à des instruments de bord afin de permettre l'exploitation des données de géolocalisation calculées à partir des mesures satellitaires, ainsi qu'au système 20 qui va les contrôler.

Le système 20 comprend lui aussi des moyens 21 de traitement de données, grâce auxquels il va pouvoir mettre en oeuvre un procédé selon le premier aspect de l'invention, et une interface 22. Cette interface 22 peut prendre de nombreuses apparences comme un écran, un haut-parleur, ou tout simplement être reliée aux instruments de bords et sert de façon générale à définir une zone de positionnement garantie autour de l'appareil 1. Par exemple, sur un écran du pilote, il désignera un volume dans lequel une collision est possible. De plus, des couloirs aériens sont définis pour les avions. Le volume de protection peut être utilisé pour maintenir avec certitude un avion à l'intérieur du couloir aérien.

En outre, le système 20 peut avantageusement être couplé à un système 30 de navigation, tel une centrale inertielle, fournissant aux moyens 21 de traitement des données de navigation qui peuvent être utilisées lors de l'étape de détection de panne, afin de se situer dans un contexte AAIM.

L'invention concerne également un véhicule 1, en particulier un avion, équipé d'un tel système 20 de contrôle d'intégrité, ce qui lui permet un niveau de sécurité inégalé, puisqu'il n'ignore plus la possibilité d'avoir deux pannes satellites simultanées, cas qui n'était pas traité auparavant, et qui pouvait conduire à une catastrophe aérienne si un volume de protection trop restreint était calculé à cause de la possibilité d'une seconde mesure fautive. L'invention n'est toutefois pas limitée aux avions et peut équiper tout aéronef, voire navire ou véhicule terrestre, même si l'exigence d'intégrité des mesures satellitaire n'est pas aussi cruciale.

## Revendications

**1.** Procédé de détermination d'un volume de protection dans le cas de deux mesures défaillantes de pseudo-distance entre un satellite et un récepteur recevant des signaux émis par différents satellites d'une constellation de radio-positionnement, **caractérisé en ce qu'**il comprend des étapes de :

    (a) Détermination d'une variable de test représentative de la vraisemblance d'une défaillance en fonction des pseudo-distances mesurées par le récepteur ;
    (b) Estimation, pour chaque couple de pseudo-distances parmi les pseudo-distances mesurées par le récepteur, de l'ensemble des couples de biais minimum détectables pour une probabilité de détection manquée donnée, à partir de l'expression de la variable de test obtenue ;
    (c) Expression, pour chaque couple de pseudo-distances, de l'ensemble des couples de biais minimum détectables estimés sous la forme d'une équation définissant une ellipse associée au couple de pseudo-distances considéré ;
    (d) Expression de l'équation de chaque ellipse en coordonnées paramétriques et expression de chaque couple de biais minimum détectables associés en fonction d'un unique paramètre ;
    (e) Projection de chaque couple de biais minimum détectables ainsi paramétrisé sur au moins un sous-espace de $R^3$ ;
    (f) Calcul, pour chaque sous-espace et chaque couple de biais, de l'erreur de position maximale induite par le couple de biais ;
    (g) Sélection, pour chaque sous-espace, du maximum parmi toutes les erreurs de position maximales calculées et transmission vers l'extérieur des résultats de cette sélection.

**2.** Procédé selon la revendication précédente, **caractérisé en ce que** le ou les sous-espaces choisis à l'étape (e) sont supplémentaires dans $R^3$, de façon à ce que les erreurs de position maximales définissent les dimensions d'un volume.

**3.** Procédé selon la revendication précédente, **caractérisé en ce que** l'étape (e) comprend une projection sur le plan horizontal et une projection sur l'axe vertical.

**4.** Procédé selon l'une des revendications précédentes, **caractérisé en ce que** la variable de test générée à l'étape (a) suit une loi du $\chi^2$ à *N* degrés de liberté.

**5.** Procédé selon l'une des revendications précédentes, **caractérisé en ce que** les coefficients de l'équation d'ellipse déterminée à l'étape (c) s'expriment en fonction de la probabilité de détection manquée et de la variance du bruit de mesure.

**6.** Procédé selon l'une des revendications précédentes, dans lequel l'étape (d) comprend la projection de l'ellipse dans une base de vecteurs propres.

**7.** Procédé selon l'une des revendications précédentes, dans lequel la paramétrisation de l'étape (d) est une paramétrisation polaire, l'unique paramètre étant une coordonnée angulaire.

**8.** Procédé selon l'une des revendications précédentes, dans lequel une erreur d'estimation est obtenue à chaque projection à l'étape (e) d'un couple de biais sur un sous-espace de $R^3$, cette erreur d'estimation étant un vecteur de même dimension que le sous-espace s'exprimant seulement en fonction de l'unique paramètre obtenu à l'étape (d), noté $\theta$.

**9.** Procédé selon la revendication précédente, dans lequel l'erreur de position maximale induite est calculée à l'étape (f) en prenant la norme du vecteur erreur d'estimation et en la dérivant par rapport à $\theta$.

**10.** Système de contrôle d'intégrité (20), comprenant des moyens (21) de traitement de données, associé à un récepteur (10) recevant des signaux émis par différents satellites d'une constellation de radio-positionnement et fournissant au système (20) des pseudo-distances mesurées entre des satellites de ladite constellation et le récepteur (10) sur lesquelles les moyens (21) mettent en oeuvre un procédé selon l'une des revendications précédentes, à l'issue duquel un signal est transmis à une interface (22) du système (20).

**11.** Système selon la revendication précédente, **caractérisé en ce qu'**il est couplé à un dispositif (30) de navigation inertielle selon un contexte AAIM.

**12.** Véhicule (1) équipé d'un système selon l'une des revendications 10 à 11.

**Patentansprüche**

**1.** Verfahren zur Bestimmung eines Schutzraums im Falle von zwei ausgefallenen Messungen der Pseudo-Distanz zwischen einem Satelliten und einem Empfänger zum Empfangen von Signalen, die von unterschiedlichen Satelliten einer Funkortungs-Konstellation gesendet werden, **dadurch gekennzeichnet, dass** es die folgenden Schritte umfasst:

(a) Bestimmung einer Testvariablen, die für die Wahrscheinlichkeit eines Ausfalls in Abhängigkeit der durch den Empfänger gemessenen Pseudo-Distanzen repräsentativ ist;
(b) Schätzung, für jedes Pseudo-Distanzenpaar unter den durch den Empfänger gemessenen Pseudo-Distanzen, der Gesamtheit der Paare erkennbarer Mindestabweichungen bei einer gegebenen Wahrscheinlichkeit einer Fehlerkennung ausgehend von dem Ausdruck der erhaltenen Testvariable;
(c) Ausdruck, für jedes Pseudo-Distanzenpaar, der Gesamtheit der Paare geschätzter erkennbarer Mindestabweichungen in Form einer Gleichung, die eine Ellipse definiert, die dem betrachteten Pseudo-Distanzenpar zugeordnet ist;
(d) Ausdruck der Gleichung jeder Ellipse in parametrischen Koordinaten und Ausdruck jedes Paares zugeordneter erkennbarer Mindestabweichungen in Abhängigkeit eines einzigen Parameters;
(e) Projektion jedes somit parametrisierten Paares erkennbarer Mindestabweichungen in mindestens einem Unterraum von $R^3$;
(f) Berechnung, für jeden Unterraum und jedes Abweichungspaar, des durch das Abweichungspaar bewirkten maximalen Positionsfehlers;
(g) Auswahl, für jeden Unterraum, des Maximum unter allen berechneten maximalen Positionsfehlern und Übertragung der Ergebnisse dieser Auswahl nach außerhalb.

**2.** Verfahren nach dem vorhergehenden Anspruch, **dadurch gekennzeichnet, dass** der oder die in Schritt (e) ausgewählten Unterräume in $R^3$ ergänzend sind, derart, dass die maximalen Positionsfehler die Dimensionen eines Raumes festlegen.

**3.** Verfahren nach dem vorhergehenden Anspruch, **dadurch gekennzeichnet, dass** Schritt (e) eine Projektion in der horizontalen Ebene und eine Projektion auf der vertikalen Achse umfasst.

**4.** Verfahren nach einem der vorhergehenden Ansprüche, **dadurch gekennzeichnet, dass** die in Schritt (a) erzeugte

Testvariable einem $\chi^2$-Gesetz mit N Freiheitsgraden folgt.

5. Verfahren nach einem der vorhergehenden Ansprüche, **dadurch gekennzeichnet, dass** die Koeffizienten der in Schritt (c) bestimmten Ellipsengleichung in Abhängigkeit von der Wahrscheinlichkeit der Fehlerkennung und der Varianz des Messrauschens ausgedrückt werden.

6. Verfahren nach einem der vorhergehenden Ansprüche, wobei Schritt (d) die Projektion der Ellipse in einer Basis von Eigenvektoren umfasst.

7. Verfahren nach einem der vorhergehenden Ansprüche, wobei die Parametrierung in Schritt (d) eine Polarparametrisierung ist, wobei der einzige Parameter eine Winkelkoordinate ist.

8. Verfahren nach einem der vorhergehenden Ansprüche, wobei in Schritt (e) bei jeder Projektion eines Abweichungspaares in einem Unterraum von $R^3$ ein Schätzungsfehler erhalten wird, wobei dieser Schätzungsfehler ein Vektor der gleichen Dimension wie der Unterraum ist, der nur in Abhängigkeit von dem einzigen in Schritt (d) erhaltenen Parameter ausgedrückt wird und als $\theta$ bezeichnet wird.

9. Verfahren nach dem vorhergehenden Anspruch, wobei der bewirkte maximale Positionsfehler in Schritt (f) berechnet wird, indem die Norm des Schätzungsfehler-Vektors genommen und nach $\theta$ abgeleitet wird.

10. Integritätskontrollsystem (20), umfassend Mittel (21) zur Datenverarbeitung, wobei das System (20) einem Empfänger (10) zum Empfangen von Signalen, die von unterschiedlichen Satelliten einer Funkortungs-Konstellation gesendet werden, zugeordnet ist, wobei der Empfänger (10) dem System (20) Pseudo-Distanzen, die zwischen den Satelliten der Konstellation und dem Empfänger (10) gemessen werden, bereitstellt, und wobei die Mittel (21) anhand von Pseudo-Distanzen ein Verfahren nach einem der vorhergehenden Ansprüche ausführen, an dessen Ende ein Signal an eine Schnittstelle (22) des Systems (20) gesendet wird.

11. System nach dem vorhergehenden Anspruch, **dadurch gekennzeichnet, dass** es mit einer Vorrichtung (30) zur inertialen Navigation gemäß einem AAIM-Kontext verbunden ist.

12. Fahrzeug (1), das mit einem System nach einem der Ansprüche 10 bis 11 ausgerüstet ist.

**Claims**

1. A method for determining a protection volume in the event of two faulty measurements of pseudorange between a satellite and a receiver receiving signals transmitted by different satellites of a radio-positioning constellation, **characterised in that** it comprises steps of:

(a) Determining a test variable representative of the likelihood of a fault as a function of the pseudoranges measured by the receiver;
(b) Estimating, for each pair of pseudoranges among the pseudoranges measured by the receiver, the set of detectable minimum-bias pairs for a given missed detection probability, from the expression of the test variable obtained;
(c) Expressing, for each pair of pseudoranges, the set of detectable minimum-bias pairs estimated in the form of an equation defining an ellipse associated with the pair of pseudoranges in question;
(d) Expressing the equation of each ellipse in parametric coordinates and expressing each associated detectable minimum-bias pair as a function of a single parameter;
(e) Projecting each detectable minimum-bias pair accordingly parameterised on at least one subspace of $R^3$;
(f) Calculating, for each subspace and each bias pair, the maximal position error caused by the bias pair;
(g) Selecting, for each subspace, the maximum from among all of the position maximal errors calculated and transmitting the results of said selection outwards.

2. The method according to the preceding claim, **characterised in that** the subspace or the subspaces selected at step (e) are complementary in $R^3$, in such a way that the maximal position errors define the dimensions of a volume.

3. The method according to the preceding claim, **characterised in that** step (e) comprises projection on the horizontal plane and projection on the vertical axis.

4. The method according to any one of the preceding claims, **characterised in that** the test variable generated at step (a) follows a $\chi^2$ distribution with $N$ degrees of freedom.

5. The method according to any one of the preceding claims, **characterised in that** the coefficients of the ellipse equation determined at step (c) are expressed as a function of the probability of missing detection and of the variance in noise measurement.

6. The method according to any one of the preceding claims, in which step (d) comprises projection of the ellipse on an eigenvector basis.

7. The method according to any one of the preceding claims, in which parametrisation of step (d) is polar parametrisation, the single parameter being an angular coordinate.

8. The method according to any one of the preceding claims, in which an estimation error is obtained at each projection at step (e) of a bias pair on a subspace of $R^3$, this estimation error being a vector of the same dimension as the subspace expressed only as a function of the single parameter obtained at step (d), noted $\theta$.

9. The method according to the preceding claim, in which the maximal position error caused is calculated at step (f) by adopting the standard of the vector estimation error and deriving it therefrom relative to $\theta$.

10. An integrity-control system (20), comprising data-processing means (21), linked to a receiver (10) receiving signals transmitted by different satellites of a radio-positioning constellation and supplying the system (20) with pseudoranges measured between satellites of said constellation and the receiver (10) on which the means (21) execute a method according to any one of the preceding claims, on completion of which a signal is transmitted to an interface (22) of the system (20).

11. A system according to the preceding claim, **characterised in that** it is coupled to an inertial navigation device (30) according to an AAIM context.

12. A vehicle (1) equipped with a system according to any one of claims 10 to 11.

**FIG. 1**

**FIG. 2**

**FIG. 3**

Algorithme de détection de panne

Variable de test

Calcul du biais minimum détectable sur la mesure 1

$b_{min,1}$

Projection sur l'erreur de position

Rayon de protection associé à la mesure 1

Calcul du biais minimum détectable sur la mesure N

$b_{min,N}$

Projection sur l'erreur de position

Rayon de protection associé à la mesure N

Maximum

Rayons de protection 1 panne

100    200    300    400

**FIG. 4**

Algorithme de détection de panne

Variable de test

Couple de mesure (1,2)

Couple de mesure (1,N)

Calcul du couple de biais minimum détectables pour 1 et 2

Ellipse de coordonnées de biais sur les mesures 1 et 2

Projection de l'ellipse dans une base de vecteurs propres

Paramétrisation polaire de l'ellipse en fonction d'un paramètre Θ

Projection sur l'erreur de position

Maximum sur Θ

Rayon de protection associé au couple (1,2)

Calcul du couple de biais minimum détectables pour 1 et N

Ellipse de coordonnées de biais sur les mesures 1 et N

Projection de l'ellipse dans une base de vecteurs propres

Paramétrisation polaire de l'ellipse en fonction d'un paramètre Θ

Projection sur l'erreur de position

Maximum sur Θ

Rayon de protection associé au couple (1,N)

Maximum

Rayons de protection 2 pannes

EP 2 598 912 B1

100 → Détection de panne

210 → Estimation d'une pluralité d'ensembles de couples de biais minimum détectables

220 → Expression des équations d'ellipses

230 → Projection des ellipses dans des bases de vecteurs propres

240 → Paramétrisation polaire de chaque couple de biais minimum détectables

200

310 → Projection sur les sous-espaces

320 → Calcul de l'erreur de position pour chaque sous–espace et chaque couple de biais

330 → Maximum sur θ de l'erreur de position

300

410 → Maximum sur tous les couples de pseudo-distances des erreurs de position maximales

420 → Transmission du volume de protection

400

**FIG. 5**

**FIG. 6**

**FIG. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

*   **K. VANDERWERF.** Fde using multiple integrated gps/inertial kalman filters in the presence of temporally and spatially correlated ionospheric errors. *Proceedings of ION GPS,* 2001